# EUROPÄISCHE PATENTSCHRIFT

(11) **EP 0 760 593 B1**
(45) Veröffentlichungstag und Bekanntmachung des Hinweises auf die Patenterteilung: **26.08.1998**
(21) Anmeldenummer: 95919272.5
(22) Anmeldetag: 24.05.1995
(51) Int. Cl.: A01F 12/44

(54) **SIEBVORRICHTUNG FÜR EINEN MÄHDRESCHER, INSBESONDERE EINEN VERSUCHSFELDMÄHDRESCHER**
SCREENING DEVICE FOR A COMBINE HARVESTER, IN PARTICULAR FOR A TRIALS-PLOT COMBINE HARVESTER
APPAREIL DE CRIBLAGE POUR MOISSONNEUSE-BATTEUSE, NOTAMMENT POUR MOISSONNEUSE-BATTEUSE POUR CHAMP EXPERIMENTAL

(30) Priorität: 27.05.1994 AT 1086/94
(43) Veröffentlichungstag der Anmeldung: 12.03.1997
(73) Patentinhaber: Wintersteiger Gesellschaft m.b.H., A-4910 Ried (AT)
(72) Erfinder: SPIESBERGER, Franz, A-4923 Lohnsburg (AT); AIGNER, Johann, A-4910 Ried/Innkreis (AT)
(74) Vertreter: Hübscher, Helmut, Dipl.-Ing.
(86) Internationale Anmeldenummer: AT9500101
(87) Internationale Veröffentlichungsnummer: WO9532609

(56) Entgegenhaltungen:
- EP-A- 0 178 018
- DE-C- 69 861
- FR-A- 1 079 152
- FR-A- 1 194 881
- FR-A- 1 196 138
- US-A- 1 383 918
- US-A- 2 441 917

## Beschreibung

Die Erfindung bezieht sich auf eine Siebvorrichtung für einen Mähdrescher, insbesondere einen Versuchsfeldmähdrescher, gemäß dem Oberbegriff von Anspruch 1 oder 2.

Um das nach dem Dreschvorgang mit Kurzstroh, Spreu u. dgl. vermengte Erntegut von diesen Beimengungen zu reinigen, werden bei Mähdreschern Siebvorrichtungen im Anschluß an einen Vorbereitungsboden vorgesehen, die im Zusammenwirken mit dem Luftstrom eines Reinigungsgebläses die Beimengungen ausscheiden. Diese Reinigungswirkung hängt unter anderem vom Anstellwinkel der Reinigungssiebe ab, insbesondere bei vergleichsweise kurzen Reinigungssieben, wie dies bei Versuchsfeldmähdreschern der Fall ist, und kann daher auch über eine Neigungsverstellung der Reinigungssiebe an verschiedene Fruchtarten oder an die Dreschgutmenge bestimmende, unterschiedliche Bestandsdichten angepaßt werden. Zu diesem Zweck ist es bekannt, für die Reinigungssiebe Einschübe mit unterschiedlicher Neigung vorzusehen, was jedoch eine Umstellung der Siebneigung bei eingesetzten Reinigungssieben ausschließt. Zur Vermeidung dieses Nachteiles wurde auch schon vorgeschlagen, die Reinigungssiebe in Rahmen zu halten, die um eine Querachse im Fahrgestell des Mähdreschers schwenkbar gelagert sind und im Bereich ihres von der Schwenkachse abgewandten Endes mit seitlich abstehenden Bozen in eine bogenförmige Langlochführung eingreifen, so daß die Rahmen in ihrer jeweiligen Winkellage gegenüber den Langlochführungen festgeklemmt werden können. Diese Verstellenrichtungen sind allerdings umständlich zu handhaben, weil zunächst die Klemmungen auf beiden Rahmenlängsseiten gelöst werden müssen, bevor der Rahmen mit dem Sieb in seiner Neigung verändert werden kann. Die neue Siebneigung ist dann wieder über die beidseitigen Klemmeinrichtungen zu sichern, so daß vielfach auf eine Neigungsverstellung verzichtet wird, obwohl dadurch das Reinigungsergebnis erheblich verbessert werden könnte. In diesem Zusammenhang ist zu bedenken, daß jedes bergauf oder bergab fahren eine Neigungsverstellung wünschenswert erscheinen läßt, um gleichbleibende Reinigungsergebnisse sicherzustellen.

Zur Neigungsverstellung von zwei übereinander in einem kastenartigen Gehäuse angeordneten Reinigungssieben eines Mähdreschers ist es außerdem bekannt (FR 1 196 138 A), das kastenartige Gehäuse im zulaufseitigen Bereich um eine Querachse schwenkbar aufzuhängen und auf der der Querachse gegenüberliegenden Seite über einen Lenker an einem Schwenkarm anzulenken, der mit Hilfe eines Handhebels verstellt werden kann. Über diese Verstelleinrichtung läßt sich zwar das Gehäuse mit den beiden Reinigungssieben vergleichsweise einfach in seiner Neigung den jeweiligen Anforderungen anpassen, doch ist keine gegenseitige Verstellung der beiden Reinigungssiebe möglich, was vor allem bei Versuchsfeldmähdreschern als schwerwiegender Nachteil empfunden wird.

Der Erfindung liegt somit die Aufgabe zugrunde, eine Siebvorrichtung für einen Mähdrescher, insbesondere einen Versuchsfeldmähdrescher, mit einfachen konstruktiven Mitteln so zu verbessern, daß eine leicht handhabbare, allen Anforderungen genügende Neigungsverstellung der Reinigungssiebe möglich wird.

Ausgehend von einer Siebvorrichtung mit zwei übereinander angeordneten, je um eine Querachse im Fahrgestell schwenkbar gelagerten Rahmen für je ein Reinigungssieb und mit einer Verstelleinrichtung für die Rahmen löst die Erfindung die gestellte Aufgabe dadurch, daß die Verstelleinrichtung aus zwei je einem Rahmen zugehörigen, zu deren Querachsen parallelen, an je einem Schwenktrieb angeschlossenen Betätigungswellen besteht, die jeweils Wenigstens einen über einen Lenker mit dem zugehörigen Rahmen verbundenen Schwenkarm aufweisen, und daß die Betätigungswelle für den einen Rahmen im Fahrgestell gehalten ist, während die Betätigungswelle für den anderen Rahmen entweder auf dem Rahmen mit der im Fahrgestell gehaltenen Betätigungswelle oder als koaxiale Hohlwelle auf der im Fahrgestell gehaltenen Betätigungswelle lagert, wobei die Schwenkantriebe für die beiden einander koaxial umschließenden Betätigungswellen kuppelbar sind.

Durch diese Maßnahmen kann in einfacher Art der Umstand berücksichtigt werden, daß üblicherweise nach einer Grundeinstellung der gegenseitigen Siebneigungen nur mehr die gemeinsame Verstellung beider Siebe verlangt wird. Diese gemeinsame Neigungsverstellung erfolgt über die im Fahrgestell gelagerte Betätigungswelle, weil ja die zusätzliche Betätigungswelle auf dem einen Rahmen gelagert ist und den anderen Rahmen nur gegenüber diesem Rahmen verstellt, so daß bei gegenüber diesem Rahmen verriegelter zusätzlicher Betätigungswelle beide Rahmen über einen Lenker verbunden sind, der bei der Verlagerung eines Rahmens die Mitnahme des anderen Rahmens bewirkt. Die Verstellung eines Rahmens gegenüber dem anderen Rahmen erfolgt mittels der auf einem der Rahmen vorgesehenen Betätigungswelle. Durch eine koaxiale Führung der einen Betätigungswelle in der hohlen anderen Betätigungswelle kann eine raumsparende Verstelleinrichtung geschaffen werden, die ebenfalls für beide Rahmen eine voneinander unabhängige Neigungseinstellung über die entsprechende Betätigungswelle erlaubt.

Wird von einer Siebvorrichtung mit einem um eine Querachse im Fahrgestell schwenkbar gelagerten Rahmen für ein Reinigungssieb und mit einer Verstelleinrichtung aus einer zur Querachse parallelen, im Fahrgestell gelagerten und an einen Schwenktrieb angeschlossenen Betätigungswelle ausgegangen, die wenigstens einen über einen Lenker mit dem Rahmen verbundenen Schwenkarm aufweist, so kann das Reinigungssieb einen angelenkten Endabschnitt tragen, wobei die Verstelleinrichtung neben der im Fahrgestell gelagerten Betätigungswelle für den Rahmen eine weitere Betätigungswelle für den angelenkten Endabschnitt des Reinigungssiebes aufweist, der zumindest über einen Lenker und einen Schwenkarm mit der zugehörigen Betätigungswelle antriebsverbunden ist, die entweder auf dem Rahmen oder als koaxiale Hohlwelle auf der dem Rahmen zugehörigen Betätigungswelle lagert, in welchem Fall die Schwenkantriebe für die beiden einander koaxial umschließenden Betätigungswellen kuppelbar sein müssen. Das Reinigungssieb einer solchen Siebvorrichtung ist demnach gelenkig in zwei Abschnitte unterteilt, um den Endabschnitt unter einem größeren Neigungswinkel als das übrige Sieb anstellen zu können. Die Verstelleinrichtung erlaubt wiederum die voneinander unabhängige Neigungseinstellung der beiden Siebabschnitte oder deren gemeinsame Verstellung zu.

Zur gemeinsamen Schwenkverstellung der Rahmen bzw. des Rahmens und des gelenkigen Siebendabschnittes können die Schwenkantriebe für die beiden einander koaxial umschließenden Betätigungswellen aus je einem Schwenkhebel und einer Rasteinrichtung für den Schwenkhebel bestehen, wobei die Rasteinrichtungen gemeinsam um die Achse der Betätigungswellen drehverstellbare Rastscheiben aufweisen. Wird einer der beiden Schwenkhebeln betätigt, so wird über die mit ihm verbundene Betätigungswelle nur der zugehörige Rahmen bzw. Siebabschnitt verstellt. Zur gemeinsamen Betätigung beider Betätigungswellen brauchen lediglich die beiden Rastscheiben über einen gemeinsamen Antrieb verdreht zu werden.

In der Zeichnung ist der Erfindungsgegenstand beispielsweise dargestellt. Es zeigen
- Fig. 1: eine erfindungsgemäße Siebvorrichtung in einem schematischen Längsschnitt durch einen ausschnittsweise angedeuteten Versuchsfeldmähdrescher,
- Fig. 2: eine Verstelleinrichtung für die übereinander angeordneten Reinigungssiebe gemäß der Fig. 1, jedoch mit ferngesteuerten Schwenktrieben,
- Fig. 3: ein gelenkig unterteiltes Reinigungssieb mit einer Verstelleinrichtung gemäß der Fig. 1,
- Fig. 4: eine weitere Ausführungsform einer Verstelleinrichtung für zwei übereinander angeordnete Reinigungssiebe in einem schematischen Längsschnitt durch einen Versuchsfeldmähdrescher und
- Fig. 5: die Verstelleinrichtung nach der Fig. 4 in einem schematischen Querschnitt durch den Mähdrescher in einem größeren Maßstab.

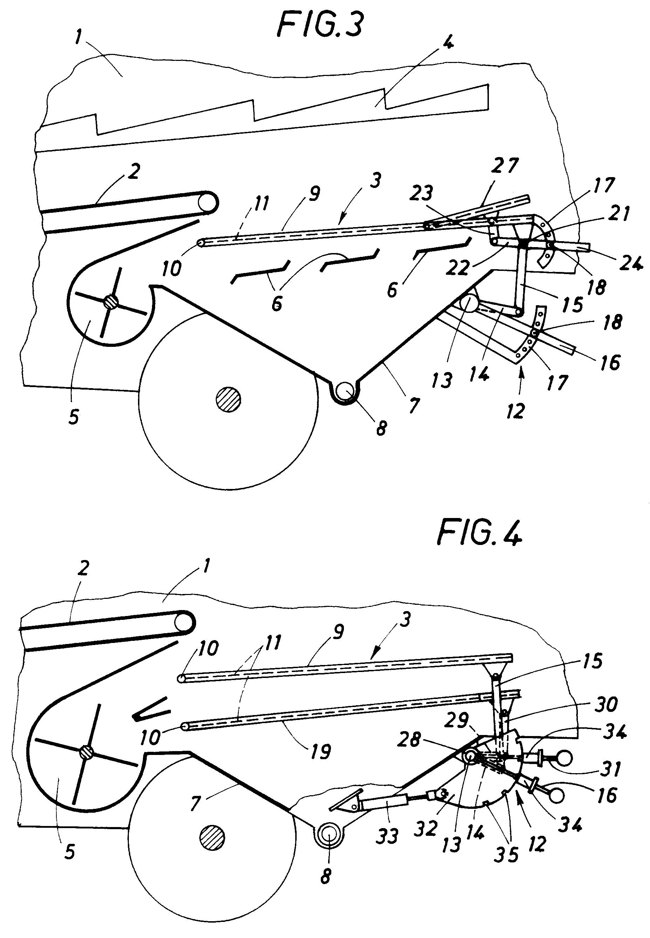

In dem schematisch angedeuteten Fahrgestell 1 der dargestellten Versuchsfeldmähdrescher ist in üblicher Weise ein das Dreschgut von der Dreschtrommel über den Dreschkorb übernehmender Förderboden 2 in Form eines umlaufenden Förderbandes vorgesehen, der das mit Kurzstroh, Spreu u. dgl. vermischte Erntegut an eine Siebvorrichtung 3 weiterleitet, während das Stroh und die übrigen durch den Dreschkorb ausgeschiedenen Pflanzenteile über einen Schüttler 4 ausgetragen werden. Die Siebvorrichtung 3 wirkt mit einem Reinigungsgebläse 5 zusammen, das für einen sichtenden Luftstrom durch die Siebvorrichtung 3 sorgt. Um eine entsprechende Luftströmung sicherzustellen, können Leitbleche 6 (Fig. 3) unterhalb der Siebvorrichtung 3 vorgesehen sein. Das durch die Siebvorrichtung 3 gereinigte Erntegut wird in einem Sammeltrichter 7 gesammelt und beispielsweise über eine pneumatische Förderleitung 8 ausgetragen.

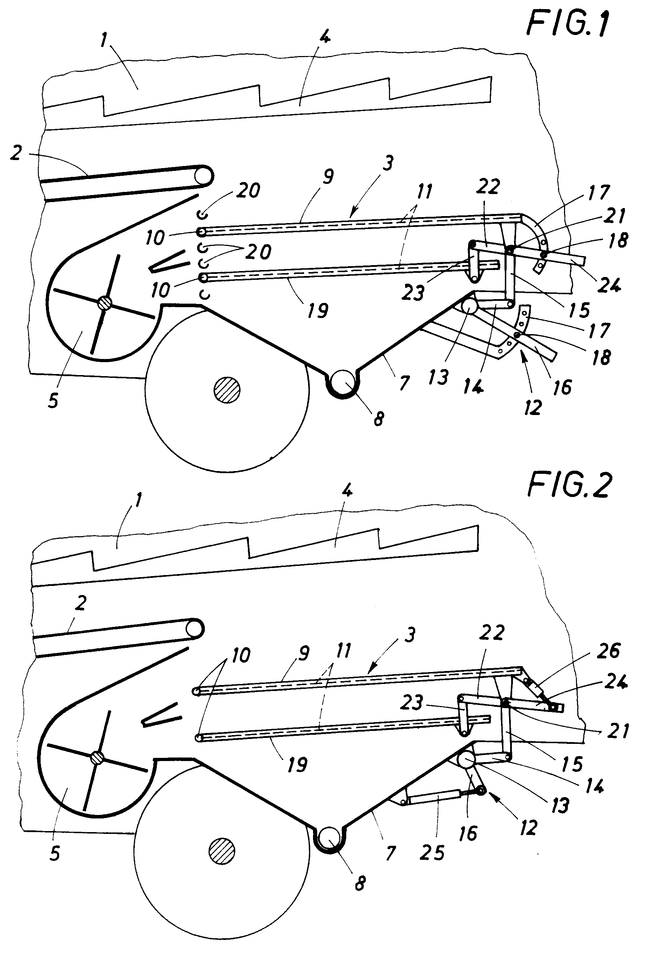

Die Siebvorrichtung 3 selbst besteht gemäß den Fig. 1 und 2 aus zwei übereinander angeordneten Rahmen 9 und 19, die je um eine Querachse 10 im Fahrgestell 1 schwenkverstellbar gehalten sind und eine Einschubführung für ein Reinigungssieb 11 bilden, so daß die Siebvorrichtung 3 je nach Bedarf mit verschiedenen Reinigungssieben 11 ausgestattet werden kann. Die Neigungsverstellung des Rahmens 9 erfolgt über eine Verstelleinrichtung 12, die eine zur Querachse 10 des Rahmens 9 parallele, im Fahrgestell 1 gelagerte Betätigungswelle 13 aufweist, auf der beidseits Schwenkarme 14 sitzen, zwischen denen und dem Rahmen 9 Lenker 15 angelenkt sind. An einem Ende der Betätigungswelle 13 ist ein von Hand betätigbarer Schwenkhebel 16 vorgesehen, dessen Drehstellungen mit Hilfe einer Rasteinrichtung 17 verriegelt werden können. Diese Rasteinrichtung 17 besteht im wesentlichen aus einer Lochleiste, in deren Löcher ein auf dem Schwenkhebel 16 vorgesehener Verriegelungszapfen 18 einrastet. Wird der Schwenkhebel 16 nach einer Entriegelung verschwenkt, so werden die Schwenkarme 14 über die Betätigungswelle 13 mitgedreht, was eine entsprechende Höhenverlagerung des Rahmens 9 über die Lenker 15 und damit eine Neigungseinstellung des oberen Reinigungssiebes 11 um die Schwenkachse 10 des Rahmens 9 zur Folge hat.

Zur Neigungsverstellung des Rahmens 19, dessen Querachse 10 wie die Querachse 10 des Rahmens 9 für eine weitgehendere Einstellungsmöglichkeit wahlweise in Lager 20 unterschiedlicher Höhe eingesetzt werden können, ist auf dem Rahmen 9 eine weitere Betätigungswelle 21 gelagert, die in vergleichbarer Weise über Schwenkarme 22 und Lenker 23 mit dem unteren Rahmen 19 in Verbindung steht. Wird die Betätigungswelle 21 über einen gemäß der Fig. 1 von Hand aus verstellbaren Schwenkhebel 24 verdreht, so wird der Rahmen 19 mit dem eingeschobenen Reinigungssieb 11 gegenüber dem Reinigungssieb 11 des oberen Rahmens 9 verschwenkt. Die Verriegelung des Schwenkhebels 24 erfolgt wie die Verriegelung des Schwenkhebels 16 der Betätigungswelle 13 über eine Rasteinrichtung 17 in Form einer mit einem Verriegelungsbolzen 18 zusammenwirkenden Lochleiste. Wird der Schwenkhebel 16 für die Verstellung des oberen Reinigungssiebes 11 betätigt, so werden sowohl das obere als auch das untere Reinigungssieb gemeinsam verlagert.

Die Schwenktriebe für die Betätigungswellen 13 und 21 brauchen nicht von Hand aus verstellt zu werden. Es können hier auch mit Vorteil ferngesteuerte, motorische Stelleinrichtungen vorgesehen werden, wie dies in der Fig. 2 veranschaulicht ist, die zur Verstellung der Betätigungswellen 13 und 21 an den Schwenkhebeln 16 und 24 angreifende Schwenkzylinder 25 und 26 zeigt. Über diese Schwenkzylinder kann auch die Verriegelung der gewählten Siebneigung erfolgen. Es braucht wohl nicht betont zu werden, daß auch nur ein Schwenkzylinder für vorzugsweise die Betätigungswelle 13 zum Einsatz kommen kann, weil im allgemeinen nach einer Grundeinstellung der gegenseitigen Neigung der beiden Reinigungssiebe 11 beide Reinigungssiebe nur gemeinsam verstellt werden, z. B. zur Angleichung der Siebneigungen an die jeweilige Geländesteigung.

Wie der Fig. 3 zu entnehmen ist kann die in der Fig. 1 dargestellte Verstellvorrichtung 12 auch für die Einstellung eines gelenkig in zwei Abschnitte unterteilten Reinigungssiebes 11 verwendet werden. In diesem Fall wird über die im Fahrgestell 1 gelagerte Betätigungswelle 13 der Rahmen 9 für das Reinigungssieb 11 verstellt, während die auf dem Rahmen 9 gelagerte Betätigungswelle mit dem gelenkigen Endabschnitt 27 des Reinigungssiebes 11 antriebsverbunden ist. Mittels des Schwenkhebels 16, der selbstverständlich wieder durch einen motorischen Antrieb betätigt werden kann, wird somit das gesamte Reinigungssieb 11 verschwenkt dessen Endabschnitt 27 für sich über den Schwenkhebel 24 in seiner Neigung gegenüber dem Rahmen 9 bzw. dem übrigen Siebabschnitt eingestellt wird.

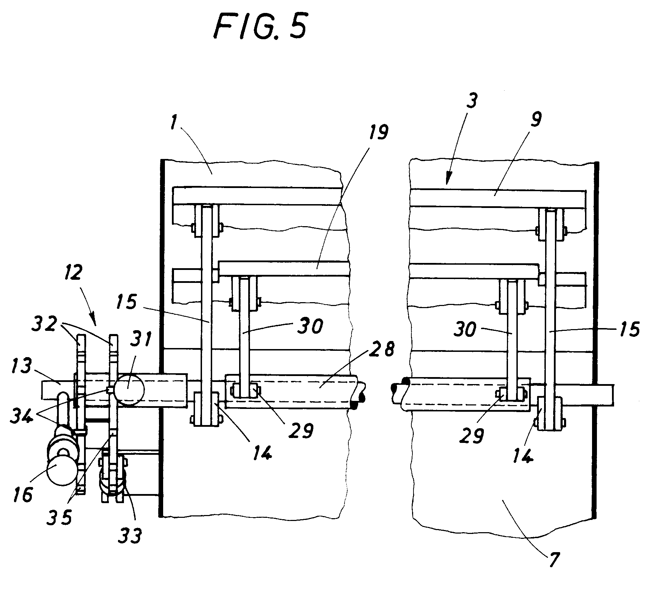

Eine weitere Möglichkeit der Neigungsverstellung zweier übereinander angeordneter Reinigungssiebe ist in den Fig. 4 und 5 dargestellt. Die Verstelleinrichtung 12 weist neben der im Fahrgestell 1 gelagerten Betätigungswelle 13 eine hohle Bestätigungswelle 28 auf, die die Betätigungswelle 13 koaxial umschließt und unabhängig von ihr verdreht werden kann. Während die Betätigungswelle 13 über die Schwenkarme 14 und die Lenker 15 am Rahmen 9 für das obere Reinigungssieb angreift, wird der Rahmen 19 für das untere Reinigungssieb über Schwenkarme 29 und Lenker 30 von der hohlen Betätigungswelle 28 verstellt. Als Schwenktriebe dienen für beide Betätigungswellen Schwenkarme 16 und 31, die mit Rasteinrichtungen in Form von segmentförmigen Rastscheiben 32 zusammenwirken, die frei drehbar auf der hohen Betätigungswelle 28 gelagert sind und nur gemeinsam mittels eines Schwenkzylinders 33 verdreht werden können. Da auf den Schwenkhebeln 16 und 31 gegen Federkraft axial verschiebbare Rastkörper 34 sitzen, die in die Rastausnehmungen 35 der Rastscheiben 32 eingreifen, ergibt sich eine Verriegelung der Schwenkhebel 16 und 31 gegenüber den Rastscheiben 32, so daß beide Betätigungswellen 14 und 28 gemeinsam über den Schwenkzylinder 33 verstellt werden. Eine gegenseitige Schwenkverstellung der Rahmen 9 und 19 erfolgt über die von Hand verstellbaren Schwenkhebel 16 und 31 nach deren Entriegelung.

## Patentansprüche

1. Siebvorrichtung für einen Mähdrescher, insbesondere einen Versuchsfeldmähdrescher, mit zwei übereinander angeordneten, je um eine Querachse (10) im Fahrgestell (1) schwenkbar gelagerten Rahmen (9, 19) für je ein Reinigungssieb (11) und mit einer Verstelleinrichtung für die Rahmen (9, 19), dadurch gekennzeichnet, daß die Verstelleinrichtung (12) aus zwei je einem Rahmen (9, 19) zugehörigen, zu deren Querachsen (10) parallelen, an je einem Schwenktrieb angeschlossenen Betätigungswellen (13, 21 bzw. 28) besteht, die jeweils wenigstens einen über einen Lenker (15, 23 bzw. 30) mit dem zugehörigen Rahmen (9, 19) verbundenen Schwenkarm (14, 22 bzw. 29) aufweisen, und daß die Betätigungswelle (13) für den einen Rahmen (9) im Fahrgesteil (1) gehalten ist, während die Betätigungswelle (21) für den anderen Rahmen (19) entweder auf dem Rahmen (9) mit der im Fahrgestell (1) gehaltenen Betätigungswelle (13) oder als koaxiale Hohlwelle auf der im Fahrgestell (1) gehaltenen Betätigungswelle (13) lagert, wobei die Schwenkantriebe für die beiden einander koaxial umschließenden Betätigungswellen (13, 28) kuppelbar sind.

2. Siebvorrichtung für einen Mähdrescher, insbesondere einen Versuchsfeldmähdrescher, mit einem um eine Querachse (10) im Fahrgestell (1) schwenkbar gelagerten Rahmen (9) für ein Reinigungssieb (11) und mit einer Verstelleinrichtung (12) aus einer zur Querachse (10) parallelen, im Fahrgestell (1) gelagerten und an einen Schwenktrieb angeschlossenen Betätigungswelle (13), die wenigstens einen über einen Lenker (15) mit dem Rahmen (9) verbundenen Schwenkarm (14) aufweist, dadurch gekennzeichnet, daß das Reinigungssieb (11) einen angelenkten Endabschnitt (27) trägt und daß die Verstelleinrichtung (12) neben der im Fahrgestell (1) gelagerten Betätigungswelle (13) für den Rahmen (9) eine weitere Betätigungswelle (21) für den angelenkten Endabschnitt (27) des Reinigungssiebes (11) aufweist, der zumindest über einen Lenker (23) und einen Schwenkarm (22) mit der zugehörigen Betätigungswelle (21) antriebsverbunden ist, die entweder auf dem Rahmen (9) oder als koaxiale Hohlwelle auf der dem Rahmen (9) zugehörigen Betätigungswelle (13) lagert, wobei die Schwenkantriebe für die beiden einander koaxial umschließenden Betätigungswellen (13, 28) kuppelbar sind.

3. Siebvorrichtung nach Anspruch 1 oder 2, dadurch gekennzeichnet, daß Schwenkantriebe für die beiden einander koaxial umschließenden Betätigungswellen (13, 28) aus je einem Schwenkhebel (16, 31) und einer Rasteinrichtung für den Schwenkhebel (16 bzw. 31) bestehen, wobei die Rasteinrichtungen gemeinsam um die Achse der Betätigungswellen (13, 28) drehverstellbare Rastscheiben (32) aufweisen.

## Claims

1. A sieving device for a harvester thresher, more particularly an experimental field harvester thresher, comprising two superposed frames (9, 19) each mounted for pivoting about a transverse axis (10) in the chassis (1) and each intended for a cleaning sieve (11) and comprising a shifting means for the frames (9, 19), characterised in that the shifting means (12) consists of two actuating shafts (13, 21; 28) which are each associated with a frame (9, 19) and which are parallel to the transverse axes (10) thereof and which are each connected to a pivoting drive and which each comprise at least one pivoting arm (14, 22; 29) connected to the associated frame (9, 19) via a link (15, 23; 30) and in that the actuating shaft (13) for the one frame (9) is mounted in the chassis (1) while the actuating shaft (21) for the other frame (19) is mounted either on the frame (9) with the actuating shaft (13) mounted in the chassis (1) or is mounted as a coaxial hollow shaft on the actuating shaft (13) mounted in the chassis (1), the pivoting drives for the two actuating shafts (13, 28), which surround one another coaxially, being adapted to be coupled.

2. A sieving device for a harvester thresher, more particularly an experimental field harvester thresher, comprising a frame (9) mounted for pivoting about a transverse axis (10) in the chassis (1) and intended for a cleaning sieve (11) and comprising a shifting means (12) consisting of an actuating shaft (13) which is parallel to the transverse axis (10) and which is mounted in the chassis (1) and which is connected a pivoting drive and which comprises at least one pivoting arm (14) connected to the frame (9) via a link (16), characterised in that the cleaning sieve (11) bears an articulated end portion (27) and in that the shifting means (12) comprises in addition to the actuating shaft (13) mounted in the chassis (1) and intended for the frame (9) another actuating shaft (21) for the articulated end portion (27) of the cleaning sieve (11), which end portion is drivingly connected at least via a link (23) and a pivoting arm (22) to the associated actuating shaft (21), which is mounted either on the frame (9) or as a coaxial hollow shaft on the actuating shaft (13) associated with the frame (9), the pivoting drives for the two actuating shafts (13, 28), which surround one another coaxially, being adapted to be coupled.

3. A sieving device according to claim 1 or 2, characterised in that pivoting drives for the two actuating shafts (13, 28) coaxially surrounding one another each consist of a pivoting lever (16, 31) and a latching means for the pivoting lever (16; 31), the latching means comprising latching disks (32), which are jointly movable in rotation about the axis of the actuating shafts (13, 28).

## Revendications

1. Dispositif de criblage pour une moissonneuse-batteuse, en particulier pour une moissonneuse-batteuse pour champ expérimental, avec deux cadres (9, 19) disposés l'un au-dessus de l'autre, montes chacun de façon à pouvoir pivoter autour d'un axe transversal (10) dans le bâti de roulage (1), chaque cadre pour un crible de nettoyage (11), et avec un dispositif de réglage destiné aux cadres (9, 19), caractérisé en ce que le dispositif de réglage (12) est constitué de deux arbres d'actionnement (13, 21, respectivement 28) appartenant chacun à un cadre (9, 19), parallèles à leurs axes transversaux (10), raccordés chacun à un entraînement pivotant, arbres d'actionnement présentant chacun au moins un bras pivotant (14, 22, respectivement 29) relié, par un bras articulé (15, 23, respectivement 30), aux cadres (9, 19) afférents, et en ce que l'arbre d'actionnement (13), destiné à un cadre (9), est maintenu dans le bâti de roulage (1), tandis que l'arbre d'actionnement (21), destiné à l'autre cadre (19), est monté à rotation soit sur le cadre (9) avec l'arbre d'actionnement (13) maintenu dans le bâti de roulage (1), soit tourillonne, à titre d'arbre creux coaxial, sur l'arbre d'actionnement (13) fixé dans le bâti de roulage (1), les entraînements de pivotement, destinés aux deux arbres (13, 28), s'entourant coaxialement l'un l'autre, étant susceptibles d'être accouplés.

2. Dispositif de criblage pour une moissonneuse-batteuse, en particulier une moissonneuse-batteuse pour champ expérimental, avec un cadre (9), monté pivotant autour d'un axe transversal (10) dans le bâti de roulage (1) et destiné à un tamis de nettoyage (11), et un avec un dispositif de réglage (12) constitué d'un arbre d'actionnement (13) parallèle à l'axe transversal (10) monté à rotation dans le bâti de roulage (1) et raccordé à un entraînement de pivotement et présentant au moins un bras pivotant (14) relié, par l'intermédiaire d'un bras articulé (15), au cadre (9), caractérisé en ce que le tamis de nettoyage (11) porte une section d'extrémité (27) articulée, et en ce que le dispositif de réglage (12) présente, à côté de l'arbre d'actionnement (13) tourillonnant dans le bâti de roulage (1), pour le cadre (9), un autre arbre d'actionnement (21), destiné à la section d'extrémité (27) articulée du tamis de nettoyage (11), qui est reliée en entraînement, au moins par l'intermédiaire d'un bras articulé (23) et d'un bras pivotant (22), à l'arbre d'actionnement (21) afférent, qui est monté soit sur le cadre (9) soit, à titre d'arbre creux coaxial, sur l'arbre d'actionnement (13) appartenant au cadre (9), les entraînements de pivotement destinés aux deux arbres d'actionnement (13, 28), s'entourant l'un l'autre de façon coaxiale, étant susceptibles d'être accouplés.

3. Dispositif de criblage selon la revendication 1 ou 2, caractérisé en ce que les entraînements pivotants destinés aux deux arbres d'actionnement (13, 28), s'entourant coaxialement l'un l'autre, sont chacun constitués d'un levier pivotant (16, 31) et d'un dispositif à encliquetage pour le levier pivotant (16, respectivement 31), les dispositifs à encliquetage présentant des disques d'encliquetage (32) réglables en rotation conjointement autour de l'axe des arbres d'actionnement (13, 28).
